# EUROPÄISCHE PATENTSCHRIFT

(11) **EP 2 994 902 B1**
(45) Veröffentlichungstag und Bekanntmachung des Hinweises auf die Patenterteilung: **21.11.2018**
(21) Anmeldenummer: 14713762.4
(22) Anmeldetag: 25.03.2014
(51) Int. Cl.: G08C 19/16, H04B 3/54, H04Q 9/00

(54) **SYSTEM UND VERFAHREN ZUM BETREIBEN EINES SYSTEMS**
SYSTEM AND METHOD FOR OPERATING A SYSTEM
SYSTÈME ET PROCÉDÉ POUR FAIRE FONCTIONNER UN SYSTÈME

(30) Priorität: 06.05.2013 DE 102013007649
(43) Veröffentlichungstag der Anmeldung: 16.03.2016
(73) Patentinhaber: Sew-Eurodrive GmbH & Co. KG, 76646 Bruchsal (DE)
(72) Erfinder: PHILIPP, Torsten, 76646 Bruchsal (DE); HIEN, Rochus, 67346 Speyer (DE)
(86) Internationale Anmeldenummer: PCT/EP2014/000803
(87) Internationale Veröffentlichungsnummer: WO 2014/180522

(56) Entgegenhaltungen:
- WO-A2-02/51089
- DE-A1- 19 526 549
- DE-A1-102011 100 361

## Beschreibung

Die Erfindung betrifft ein System und Verfahren zum Betreiben eines Systems.

Es ist allgemein bekannt, dass ein umrichtergespeister Motor über ein Versorgungskabel versorgt wird. Außerdem ist bekannt, am Motor einen Winkelsensor zur Erfassung der Rotorwellenwinkellage vorzusehen.

Aus der DE 10 2011 100361 A1 ist ein Verfahren zum Betreiben eines Antriebssystems bekannt.

Aus der WO 02/51089 A2 ist ein Verfahren zur Übertragung von Daten auf wenigstens einer elektrischen Energieversorgungsleitung bekannt.

Aus der DE 195 26 549 A1 ist eine Kommunikationsvorrichtung und ein Verfahren mit adaptiver Burstübertragungszeit bekannt.

Der Erfindung liegt daher die Aufgabe zugrunde, eine ein möglichst einfache und kostengünstige Verkabelung zu erreichen weiterzubilden.

Erfindungsgemäß wird die Aufgabe bei dem System nach den in Anspruch 1 und bei dem Verfahren nach den in Anspruch 7 oder 12 angegebenen Merkmalen gelöst.

Wichtige Merkmale der Erfindung bei dem System, umfassend einen über ein Versorgungskabel von einem Umrichter gespeisten Elektromotor, sind, dass

System, umfassend einen über ein Verbindungskabel, insbesondere Versorgungskabel, von einem Umrichter gespeisten Elektromotor,
am Motor eine motorseitige Signalelektronik angeordnet ist, insbesondere wobei die Signalelektronik zumindest einen Sensor, einen Aktuator und/oder einen Datenspeicher umfasst, und Signale über das Verbindungskabel von der Signalelektronik an eine umrichterseitige Signalelektronik übertragen werden,
wobei die umrichterseitige Signalelektronik ein Mittel zur Bestimmung von Zeitpunkten von Schaltereignissen, insbesondere der steuerbaren Schalter des Umrichters und/oder der Bremsansteuerung, aufweist und ein Mittel zur Erzeugung eines Abfragesignals, welches dann gesendet wird, wenn zwischen den Zeitpunkten, insbesondere PWM-Schaltzeitpunkten, eine für die Übertragung eines Protokolls genügend große störungsfreie Zeit zu erwarten ist,
wobei die motorseitige und/oder umrichterseitige Signalelektronik ein Mittel zur Übertragung eines Protokolls aufweist, insbesondere wobei die motorseitige und die umrichterseitige Signalelektronik je ein Mittel zur Übertragung eines bitseriellen digital Protokolls aufweisen,
wobei das Protokoll Information umfasst, welche einen jeweils vom Sensor erfassten Messwert oder von anderen Datenquellen, wie Aktuator oder Datenspeicher, stammenden Datenwert repräsentiert.

Von Vorteil ist dabei, dass die Daten immer dann übertragen werden, wenn keine Störung erwartet wird, also keine deterministisch einplanbare Störung während der Zeit der Datenübertragung vorhanden ist. Denn die Prognose der in Zukunft auszulösenden Schaltereignisse erlaubt, dass ein Zeitabschnitt vorhersehbar ist, der die Mindestlänge zur störungsfreien Datenübertragung aufweist. Denn die zeitlich um das Schaltereignis herum bewirkten Störsignale klingen innerhalb einer jeweils bekannten Zeitspanne soweit ab, so dass bei genügend großem zeitlichen Abstand zwischen zwei Schaltereignissen eine störungsfreie Datenübertragung ausführbar ist.

Von Vorteil ist auch, dass die Daten immer dann übertragen werden, wenn die durch die Änderung des Energiesignales auf der Motorleitung erzeugte Störung soweit abgeklungen sind, dass keine Beeinträchtigung während der Zeit der Datenübertragung erwartet werden kann.

Bei einer vorteilhaften Ausgestaltung weist die umrichterseitige Signalelektronik eine Zeitbasis, insbesondere Uhr, auf und/oder die motorseitige Signalelektronik weist ebenfalls eine Zeitbasis, insbesondere Uhr, auf. Von Vorteil ist dabei, dass die erfassten Daten mit einem Zeitstempel versehbar sind und somit nach Synchronisation der Zeitbasen zeitlich derart interpolierbar sind, dass zeitgleiche Daten verwendbar sind für die in der umrichterseitigen Signalelektronik implementierte Regelung für den Motor.

Bei einer vorteilhaften Ausgestaltung ist das Versorgungskabel als ganz oder teilweise abgeschirmtes Kabel ausgeführt, wobei zumindest die signalführenden Leitungen innerhalb eines Schirms angeordnet sind. Von Vorteil ist dabei, dass einerseits eine Störabstrahlung des übertragenen Signals nach außen reduziert ist und andererseits eine verringerte Einkopplung der PWM auf das Datensignals erreicht wird. Von Vorteil ist also, dass der abgeschirmte Raumbereich als Kommunikationssignal ausgeführt ist und das Leistungssignal zusammen mit dem höherfrequent aufmodulierten Datensignal im selben Träger übertragbar sind.

Bei einer vorteilhaften Ausgestaltung ist der Elektromotor ein Drehstrommotor und das Versorgungskabel weist drei Leitungen zur Durchleitung des Leistungssignals auf. Von Vorteil ist dabei, dass eine hohe Leistung in kompakter Weise erzeugbar ist.

Bei einer vorteilhaften Ausgestaltung ist der Sensor ein Temperatursensor oder ein Winkelsensor. Von Vorteil ist dabei, dass Temperaturmesswerte und/oder Winkelmesswerte erfassbar sind und übertragbar sind.

Bei einer vorteilhaften Ausgestaltung weist das Protokoll Adressdaten, Sensorsignaldaten und Zeitdaten auf. Von Vorteil ist dabei, dass jeder erfasste Messwert mit einem Zeitstempel zusammen übertragbar ist und somit eine asynchrone, also unregelmäßige Übertragung, von erfassten Werten übertragbar ist und trotzdem zeitgleiche Werte bei der Regelung des Motors berücksichtigbar sind.

Wichtige Merkmale bei dem Verfahren zum Betreiben eines Systems sind, dass es einen über ein Versorgungskabel von einem Umrichter gespeisten Elektromotor umfasst,
wobei am Motor eine motorseitigen Signalelektronik angeordnet ist und zumindest ein Sensor angeordnet ist, dessen Signale über das Versorgungskabel an eine umrichterseitige Signalelektronik übertagen werden,
wobei die umrichterseitige Signalelektronik Zeitpunkte von Schaltereignissen bestimmt, insbesondere der steuerbaren Schalter des Umrichters und/oder der Bremsansteuerung,
wobei die umrichterseitige Signalelektronik ein Abfragesignal erzeugt, welches dann gesendet wird, wenn zwischen den Zeitpunkten eine für die Übertragung eines Protokolls genügend große störungsfreie Zeit zu erwarten ist,
wobei die motorseitige Signalelektronik, insbesondere unmittelbar, nach Empfang des Abfragesignals ein Protokoll über das Versorgungskabel an die umrichterseitige Signalelektronik überträgt,
wobei das Protokoll Information umfasst, welche einen jeweils vom Sensor erfassten Messwert und einen zugehörigen Zeitstempel umfasst. Von Vorteil ist dabei, dass immer dann, wenn aufgrund der Deterministik der Störsignale, also der Prognose der Schaltereignisse und der davon verursachten und/oder bewirkten Störungen, ein störungsfreier Zeitraum absehbar ist, Daten übertragbar sind.

Bei einer vorteilhaften Ausgestaltung wird die Datenübertragung auf einem Kommunikationskanal ausgeführt, in welchem auch das Leistungssignal übertragen wird,
insbesondere also das Versorgungskabel als Kommunikationskanal verwendet wird. Von Vorteil ist dabei, dass eine einfache Verkabelung in der Anlage vorsehbar ist, da nur ein einziges Kabel zur Verbindung des Umrichters mit dem Motor vorzusehen ist.

Bei einer vorteilhaften Ausgestaltung wird oder ist die zeitliche Länge des Protokolls zu Beginn festgelegt. Von Vorteil ist dabei, dass ein störungsfreier Zeitraum nur dann zur Datenübertragung frei gegeben wird, wenn er länger andauert als die zeitliche Länge des Protokolls.

Bei einer vorteilhaften Ausgestaltung wird zu Beginn des Verfahrens eine Synchronisation ausgeführt, insbesondere zur Bestimmung eines Korrekturwertes für die Zeitbasen. Von Vorteil ist dabei, dass zur Umrechnung des motorseitig erfassten Zeitstempels ein Korrekturwert bestimmbar ist, der mittels der Synchronisation bestimmbar wird. Somit ist eine einfache Umrechnung der Zeitwerte ausführbar.

Bei einer vorteilhaften Ausgestaltung umfasst ein jeweiliges Protokoll einen Messwert und einen Zeitstempel und/oder eine Adressinformation und/oder eine Prüfinformation, insbesondere ein Prüfbit. Von Vorteil ist dabei, dass der jeweilige Messwert zusammen mit einem Zeitstempel übertragbar ist und somit zeitlich interpolierte Werte bestimmbar sind, so dass die für die Regelung des Motors verwendeten Werte zeitgleich sind, insbesondere der motorseitig erfasste Winkelwert und der umrichterseitig erfasste Stromwert..

Wichtige Merkmale bei dem Verfahren zum Betreiben eines Systems sind, dass es einen über ein Versorgungskabel von einem Umrichter gespeisten Elektromotor umfasst,
wobei am Motor eine motorseitigen Signalelektronik angeordnet ist und zumindest ein Sensor angeordnet ist, dessen Signale über das Versorgungskabel an eine umrichterseitige Signalelektronik übertagen werden,
wobei die umrichterseitige Signalelektronik Zeitpunkte von Schaltereignissen bestimmt, insbesondere der steuerbaren Schalter des Umrichters und/oder der Bremsansteuerung,
wobei die umrichterseitige Signalelektronik an die motorseitige Signalelektronik Information über ein für die Datenübertragung von der motorseitigen Signalelektronik zur umrichterseitigen Signalelektronik zugelassenen Zeitabschnitt, insbesondere Zeitfenster, sendet,
wobei der Zeitabschnitt derart lang ist, dass er für die Übertragung eines Protokolls genügend lang und störungsfrei ist,
wobei die motorseitige Signalelektronik im Zeitabschnitt ein oder mehrere Protokolle überträgt über das Versorgungskabel an die umrichterseitige Signalelektronik,
wobei das jeweilige Protokoll jeweils Information umfasst, welche einen jeweils vom Sensor erfassten Messwert und einen zugehörigen Zeitstempel umfasst.

Von Vorteil ist dabei, dass eine hohe Datenübertragungsrate erreichbar ist. Denn nach Übertragung des Beginns und Endes eines Zeitfenster sind mehrere Protokolle aufeinander folgend übertragbar, ohne dass für jedes Protokoll ein jeweiliges Abfragesignal von der umrichterseitigen Signalelektronik abgesendet werden muss.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:

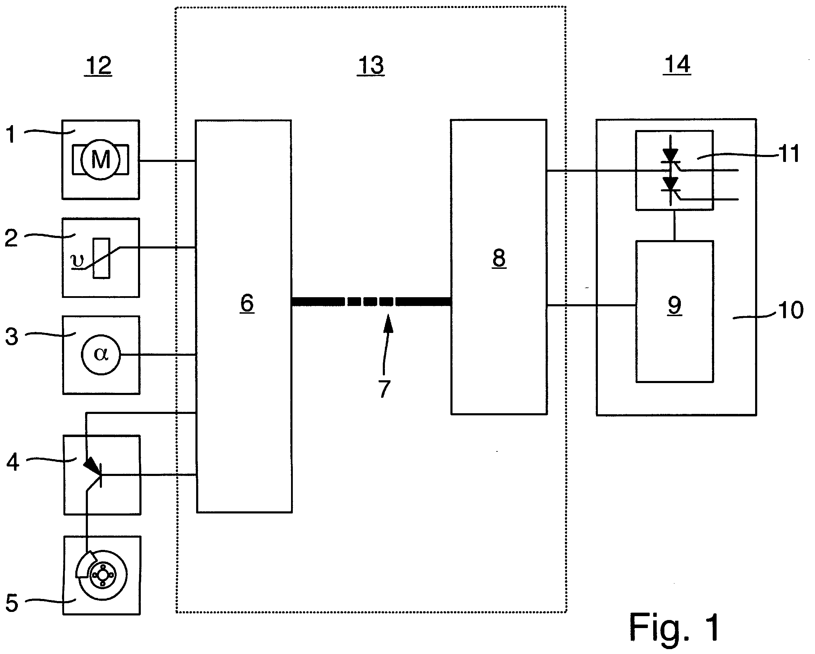

In der Figur 1 ist ein schematischer Schaltplan der erfindungsgemäßen Vorrichtung schematisch dargestellt.

Ein Umrichter 10 weist einen pulsweitenmoduliert betriebenen Wechselrichter 9 auf, welcher einen Motor, insbesondere dessen Statorwicklungen 1, speist. Hierzu ist ein Versorgungskabel zwischen Umrichter 10 und Motor angeordnet, auf dessen Leitungen nicht nur das pulsweitenmodulierte Leistungssignal sondern auch aufmodulierte Datensignale übertragen werden.

Vorzugsweise werden die Datensignale nicht im Basisband übertragen sondern auf eine Trägerfrequenz aufmoduliert, insbesondere amplitudenmoduliert, frequenzmoduliert und/oder phasenmoduliert.

Das Versorgungskabel ist vorzugsweise abgeschirmt ausgeführt.

Die Datenübertragung zwischen Umrichter und Motor ist bidirektional ausführbar.

Da der Wechselrichter 9 steuerbare Halbleiterschalter aufweist, die pulsweitenmoduliert betrieben werden, finden deterministische Schaltvorgänge statt. Dabei bestimmt die Signalelektronik des Umrichters 10 die Schaltzeitpunkte und hat daher die Information über die von ihr geplanten Schaltvorgänge. Die Schaltvorgänge bewirken Störsignale, welche die im Versorgungskabel integrierte Datenübertragung stört.

Daher findet die Datenübertragung nur auf Anfrage der Signalelektronik an die motorseitige Signalelektronik statt.

Am Motor, insbesondere im wärmeleitenden Kontakt mit den Statorwicklungen des Motors, ist ein Temperatursensor 2 angeordnet. Am Motor ist außerdem ein Winkelsensor 3 zur Erfassung der Winkelstellung der Rotorwelle vorgesehen.

Des Weiteren ist am Motor, vorzugsweise im Anschlusskasten des Motors, eine Bremsansteuerung 4 angeordnet zur Versorgung und Steuerung einer elektromagnetisch betätigbaren Bremse 5 des Motors.

Die Signale der Sensoren werden an der motorseitigen Schnittstelle 6 des Kommunikationskanals 7 an diesen Kommunikationskanal 7 übergeben, wobei der Kommunikationskanal 7 innerhalb des Schirms des Versorgungskabels angeordnet ist. Insbesondere werden die Signale als Datensignale aufmoduliert auf das Leistungssignal, welches vom Wechselrichter 9 ins Versorgungskabel eingespeist wird.

An seinem umrichterseitigen Endbereich weist das Versorgungskabel, also auch der Kommunikationskanal eine umrichterseitige Schnittstelle 8 des Kommunikationskanals 7 auf, so dass die an den Umrichter übertragenen Signale dort übergeben werden an die Signalelektronik des Umrichters 10.

Die entsprechende Auf- und/oder Demodulationseinheit 11 des Umrichters 10 ist aber auch in der Lage Signale auf das Leistungssignal im Versorgungskabel aufzumodulieren. Hierbei werden Signale zum Ansteuern der Bremse 5 an die Bremsansteuerung 4 übertragen.

Die umrichterseitige Signalelektronik fungiert als Master der Datenübertragung zwischen Umrichter 10 und Motor.

Somit bestimmt die umrichterseitige Signalelektronik mittels eines Abfragesignals, wann Daten vom Motor zum Umrichter 10 übertragen werden. Hierzu wird zunächst der nächste Schaltzeitpunkt oder die nächsten schaltzeitpunkte von der der umrichterseitigen Signalelektronik vorausberechnet. Wenn dabei ein genügend langer störungsfreier Zeitabschnitt erkennbar ist, sendet die umrichterseitige Signalelektronik nach dem Schaltzeitpunkt ein Abfragesignal an die motorseitige Signalelektronik, die daraufhin unmittelbar mit der Übertragung eines Protokolls, umfassend ein Datenwort, beginnt. Die Dauer des Protokolls ist festgelegt und wird von der umrichterseitigen Signalelektronik berücksichtigt bei der Bestimmung, ob ein störungsfreier Zeitabschnitt absehbar ist, der für die ungestörte Datenübertragung, also Übertragung eines Protokolls, verwendbar ist.

Die motorseitige Signalelektronik weist eine Zeitbasis auf, so dass die mittels der Übertragung der Protokolle übertragenen von den Sensoren erfassten Werte stets zusammen mit der Zeit bei der Erfassung des jeweiligen Wertes übertragen werden. Jeder übertragene Messwert hat also sozusagen seinen Zeitstempel.

Die umrichterseitige Signalelektronik empfängt die übertragenen Daten auch in veränderlichen Zeitrastern, also nicht isochron. Mittels des Zeitstempels sind aber die übertragenen Daten in der umrichterseitigen Signalelektronik den weiteren dieser Elektronik zugeführten Messwerten, wie beispielsweise Strommesswerte, zuordenbar. Dabei werden diese weiteren Messwerte vorzugsweise von der umrichterseitigen Signalelektronik erfasst und somit zur dortigen Zeitbasis zugeordnet. Um also die motorseitig erfassten Messwerte den zeitgleichen umrichterseitig erfassten Messwerten zuzuordnen, wird eine entsprechende Zeitkorrektur der motorseitig erfassten Messwerte ausgeführt. Dabei ist vorzugsweise auch ein Interpolation anwendbar, um die den Messwerten entsprechenden Werte möglichst zeitgleich zu bestimmen.

Zur anfänglichen Synchronisation der motorseitigen Zeitbasis und der umrichterseitigen Zeitbasis wird bei Inbetriebnahme oder Start des Systems ein Synchronisationssignal übertragen, insbesondere eine entsprechende Flanke, deren Erkennung die Synchronisation auslöst. Die umrichterseitige und motorseitige Zeitbasis sind derart genau, dass während des Betriebs die relative Zeitdrift nur unwesentlich bleibt.

Wenn das störungsfreie Zeitfenster lang genug ist, ist nach dem vorbeschriebenen System auch die Übertragung mehrere Protokolle ermöglicht.

Auch die von der umrichterseitigen Signalelektronik bewirkten Bremsansteuersignale bewirken wiederum deterministische Störungen. Denn das Betätigen der Bremse, also das Bestromen der Bremsspule, erzeugt störende Stromanteile auf den Leitungen des Versorgungskabels.

Zusätzlich kann auch ein Mittel zur Bestimmung von Fehlern bei der Datenübertragung vorgesehen sein, wobei bei erkanntem Fehler das entsprechende Protokoll nochmals übertragen wird.

Wie in Figur 1 gezeigt, weist die Antriebskomponente 12 den Motor mit Statorwicklung 1, den darin angeordneten Temperatursensor 2, den Winkelsensor 3 zur Erfassung der Winkelstellung der Rotorwelle, die Bremsansteuerung 4 und die elektromagnetisch betätigbare Bremse 5 auf.

Das Übertragungssystem 13 umfasst die motorseitige Schnittstelle 6 des Kommunikationskanals 7, den Kommunikationskanal 7 und die umrichterseitige Schnittstelle 8 des Kommunikationskanals.

Der Umrichter 14 umfasst den Wechselrichter 9 und die Auf- und/oder Demodulationseinheit 11.

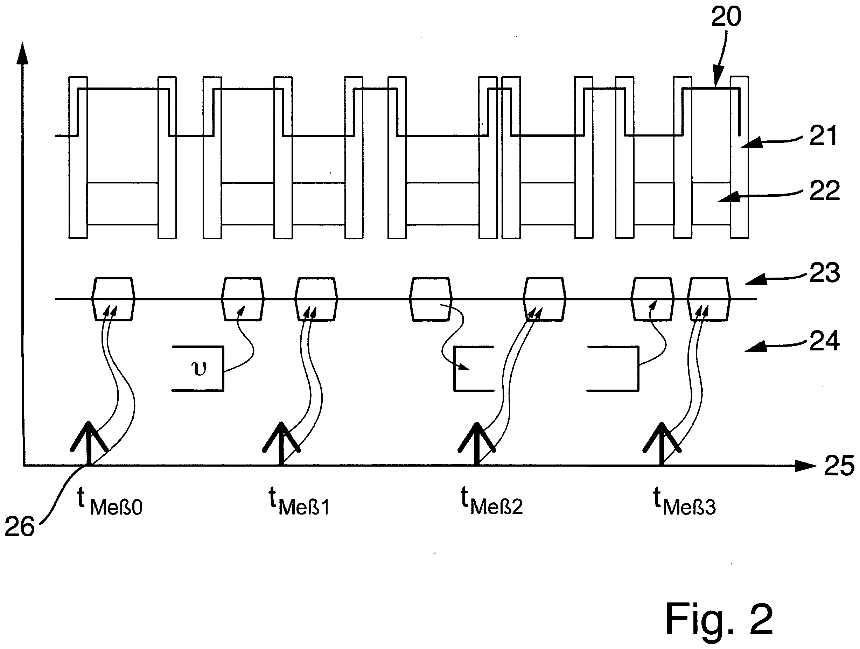

In Figur 2 ist das Übertragungsprinzip näher dargestellt.

Dabei sind in den Zeitbereichen um die Flanken des Pulsweitenmodulationsansteuersignals 20 herum jeweils Störbereiche 21 vorhanden, so dass die Zeitfenster 22 für Übertragung außerhalb dieser Störbereiche 21 angeordnet sind.

In diesen Zeitfenstern 22 findet die Datenübertragung statt, was in Figur 2 mit dem Übertragungssignal 23 dargestellt ist. Dabei umfasst das Übertragungssignal 23 jeweilige Abfragesignale und die zugehörigen Antworten, welche die bei der Winkelpositionsmessung 25 erfassten Messwerte oder von einem Sensor erfasste Werte 24 sowie die jeweiligen zugehörigen Zeitstempel, also die zur jeweiligen Erfassung zugehörigen Zeitpunkte (t_Mess0, t_Mess1, t_Mess2, t_Mess3), umfassen. Dabei wird als Zeitstempel jeweils die Zeitbasis 26, insbesondere Uhr, ausgelesen.

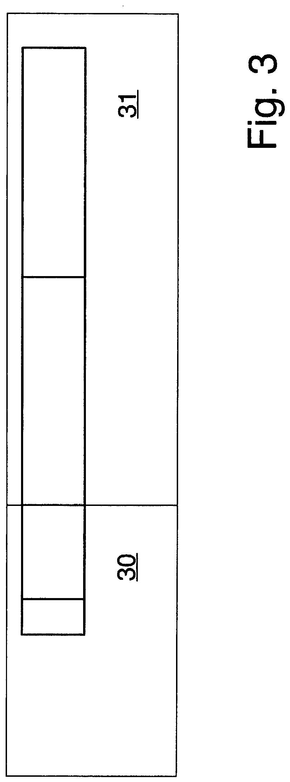

Das jeweils übertragene Protokoll ist in Figur 3 dargestellt. Dabei ist das Abfragesignal, also die Sendeanforderung 30, gefolgt von der Datensendung 31 vom Umrichter oder vom Datensendung 31 vom Motor.

In einer alternativen Ausführung werden die Datensignale über zur Leistungsleitung jeweils separate Signalleitungen übertragen, die aber auch innerhalb des Schirms des Versorgungskabels angeordnet sind.

Bei einem weiteren erfindungsgemäßen Ausführungsbeispiel bestimmt die umrichterseitige Signalelektronik zwar wiederum die Schaltzeitpunkte, jedoch wird kein Abfragesignal an die motorseitige Signalelektronik übertragen sondern es werden Informationen übertragen, die die zur Datenübertragung freigegebenen Zeitfenster definieren. Beispielsweise bestimmt die umrichterseitige Signalelektronik die Zeitpunkte des nächsten und übernächsten Schaltereignisses und daraus ein Zeitfenster für die Datenübertragung, wobei das Zeitfenster zeitlich zwischen den beiden Zeitpunkten angeordnet ist. Somit genügt die Übertragung des Zeitpunktes des Beginns und des Endes des Zeitfensters an die motorseitige Signalelektronik.

Somit betrifft die Erfindung also auch ein elektrisches Antriebssystem, bestehend aus einer Antriebseinheit, einem Umrichter und einer elektrischen Verbindung zwischen diesen, die aus einem oder mehreren Kabeln gebildet ist. Die Anzahl der benötigten Leitungen hängt dabei von Art und Anzahl der neben dem Motor zu steuernden oder zu überwachenden weiteren Komponenten des Antriebssystems, wie Rotorpositions- und Drehzahlsensor, motorseitige Datenspeicher, Getriebe, Bremse, Kühlsysteme, Lager, usw. sowie dem zwischen Motor und Umrichter gewählten Datenübertragungsverfahren ab.
Abhängig von der Länge der elektrischen Verbindung, der zu übertragenden Leistung und der Anzahl der Leitungen stellt diese Verbindung einen nennenswerten Kostenfaktor des Antriebssystem dar.

### Bezugszeichenliste

1 Statorwicklungen des Motors
2 Temperatursensor
3 Winkelsensor zur Erfassung der Winkelstellung der Rotorwelle
4 Bremsansteuerung
5 Elektromagnetisch betätigbare Bremse
6 motorseitige Schnittstelle des Kommunikationskanals
7 Kommunikationskanal
8 umrichterseitige Schnittstelle des Kommunikationskanals
9 Wechselrichter
10 Umrichter
11 Auf- und/oder Demodulationseinheit
12 Antriebskomponenten
13 Übertragungssystem
14 Umrichter
20 Pulsweitenmodulationsansteuersignal
21 Störbereich
22 Zeitfenster für Übertragung
23 Übertragungssignal
24 von einem Sensor erfasster Wert
25 Positionsmessung
26 Zeitbasis, insbesondere Uhr, für Messzeitpunkterfassung
t_Mess0 erster Messzeitpunkt
t_Mess1 zweiter Messzeitpunkt
t_Mess2 dritter Messzeitpunkt
t_Mess3 vierter Messzeitpunkt

## Patentansprüche

1. System, umfassend einen über ein Verbindungskabel, insbesondere Versorgungskabel, von einem Umrichter (10, 14) gespeisten Elektromotor,
wobei am Motor eine motorseitige Signalelektronik angeordnet ist, insbesondere wobei die Signalelektronik zumindest einen Sensor, einen Aktuator und/oder einen Datenspeicher umfasst, angeordnet um Signale über das Verbindungskabel von der Signalelektronik an eine umrichterseitige Signalelektronik zu übertragen, wobei die umrichterseitige Signalelektronik ein Mittel zur Planung und Bestimmung von Zeitpunkten von Schaltereignissen der steuerbaren Schalter des Umrichters (10, 14) und/oder der Bremsansteuerung (4), aufweist, ein Mittel zur Vorausberechnung der Zeitpunkte des nächsten und übernächsten Schaltereignisses aufweist, und ein Mittel zur Erzeugung eines Abfragesignals, welches dann gesendet wird, wenn zwischen den Zeitpunkten, insbesondere PWM-Schaltzeitpunkten, eine für die Übertragung eines Protokolls genügend große Zeitspanne zu erwarten ist, während der keine deterministisch einplanbare Störung vorhanden ist, aufweist,
wobei die motorseitige und/oder umrichterseitige Signalelektronik ein Mittel zur Übertragung eines Protokolls aufweist, insbesondere wobei die motorseitige und die umrichterseitige Signalelektronik je ein Mittel zur Übertragung eines bitseriellen digitalen Protokolls aufweisen,
wobei das Protokoll Information umfasst, welche einen jeweils vom Sensor erfassten Messwert oder von anderen Datenquellen, wie Aktuator oder Datenspeicher, stammenden Datenwert repräsentiert.

2. System nach Anspruch 1,
**dadurch gekennzeichnet, dass**
die umrichterseitige Signalelektronik eine Zeitbasis (26), insbesondere Uhr, aufweist,
und/oder dass
die motorseitige Signalelektronik ebenfalls eine Zeitbasis (26), insbesondere Uhr, aufweist.

3. System nach mindestens einem der vorangegangenen Ansprüche,
**dadurch gekennzeichnet, dass**
das Verbindungskabel als abgeschirmtes Kabel ausgeführt ist, insbesondere wobei die Leitungen innerhalb eines Schirms angeordnet sind.

4. System nach mindestens einem der vorangegangenen Ansprüche,
**dadurch gekennzeichnet, dass**
der Elektromotor ein Drehstrommotor ist und das Verbindungskabel drei Leitungen zur Durchleitung des Leistungssignals aufweist.

5. System nach mindestens einem der vorangegangenen Ansprüche,
**dadurch gekennzeichnet, dass**
der Sensor ein Temperatursensor (2), ein Bremsenzustandsinitiator und/oder ein Winkelsensor (3) ist.

6. System nach mindestens einem der vorangegangenen Ansprüche,
**dadurch gekennzeichnet, dass**
das Protokoll Adressdaten, Kommandodaten, Sensorsignaldaten und Zeitdaten aufweist.

7. Verfahren zum Betreiben eines Systems, umfassend einen über ein Verbindungskabel von einem Umrichter (10, 14) gespeisten Elektromotor,
wobei am Motor eine motorseitigen Signalelektronik angeordnet ist und zumindest ein Sensor angeordnet ist, dessen Signale über das Verbindungskabel an eine umrichterseitige Signalelektronik übertagen werden,
wobei die umrichterseitige Signalelektronik Zeitpunkte von Schaltereignissen bestimmt, insbesondere der steuerbaren Schalter des Umrichters (10, 14) und/oder der Bremsansteuerung (4),
wobei die umrichterseitige Signalelektronik die Zeitpunkte des nächsten und übernächsten Schaltereignisses plant, bestimmt und vorausberechnet,
wobei die umrichterseitige Signalelektronik ein Abfragesignal erzeugt, welches dann gesendet wird, wenn zwischen den Zeitpunkten eine für die Übertragung eines Protokolls genügend große Zeitspanne zu erwarten ist, während der keine deterministisch einplanbare Störung vorhanden ist,
wobei die motorseitige Signalelektronik, insbesondere unmittelbar, nach Empfang des Abfragesignals ein Protokoll über das Verbindungskabel an die umrichterseitige Signalelektronik überträgt,
wobei das Protokoll Information umfasst, welche einen jeweils vom Sensor erfassten Messwert und einen zugehörigen Zeitstempel umfasst.

8. Verfahren nach Anspruch 7,
**dadurch gekennzeichnet, dass**
die Datenübertragung auf einem Kommunikationskanal (7) ausgeführt wird, in welchem auch das Leistungssignal übertragen wird,
insbesondere also das Verbindungskabel als Kommunikationskanal (7) verwendet wird.

9. Verfahren nach einem der Ansprüche 7 bis 8,
**dadurch gekennzeichnet, dass**
die Zeitliche Länge des Protokolls zu Beginn festgelegt wird oder ist.

10. Verfahren nach einem der Ansprüche 7 bis 9,
**dadurch gekennzeichnet, dass**
zu Beginn des Verfahrens eine Synchronisation ausgeführt wird, insbesondere zur Bestimmung eines Korrekturwertes für die Zeitbasen (26).

11. Verfahren nach einem der Ansprüche 7 bis 10,
**dadurch gekennzeichnet, dass**
ein jeweiliges Protokoll einen Messwert und einen Zeitstempel und/oder eine Adressinformation und/oder eine Prüfinformation, insbesondere ein Prüfbit, umfasst.

12. Verfahren zum Betreiben eines Systems, umfassend einen über ein Verbindungskabel von einem Umrichter (10, 14) gespeisten Elektromotor,
wobei am Motor eine motorseitigen Signalelektronik angeordnet ist und zumindest ein Sensor angeordnet ist, dessen Signale über das Verbindungskabel an eine umrichterseitige Signalelektronik übertagen werden,
**dadurch gekennzeichnet, dass**
die umrichterseitige Signalelektronik Zeitpunkte von Schaltereignissen der steuerbaren Schalter des Umrichters (10, 14) und/oder der Bremsansteuerung (4) plant und bestimmt,
wobei die umrichterseitige Signalelektronik die Zeitpunkte des nächsten und übernächsten Schaltereignisses vorausberechnet,
wobei die umrichterseitige Signalelektronik an die motorseitige Signalelektronik Information über ein für die Datenübertragung von der motorseitigen Signalelektronik zur umrichterseitigen Signalelektronik zugelassenen Zeitabschnitt, insbesondere Zeitfenster (22), sendet,
wobei der Zeitabschnitt derart lang ist, dass er für die Übertragung eines Protokolls genügend lang und während der keine deterministisch einplanbare Störung vorhanden ist,
wobei die motorseitige Signalelektronik im Zeitabschnitt ein oder mehrere Protokolle überträgt über das Verbindungskabel an die umrichterseitige Signalelektronik,
wobei das jeweilige Protokoll jeweils Information umfasst, welche einen jeweils vom Sensor erfassten Messwert und einen zugehörigen Zeitstempel umfasst.

## Claims

1. A system, comprising an electric motor which is fed via a connecting cable, in particular supply cable, from a converter (10, 14),
wherein motor-side signal electronics are arranged on the motor, in particular wherein the signal electronics comprise at least one sensor, an actuator and/or a data memory,
arranged in order to transmit signals via the connecting cable from the signal electronics to converter-side signal electronics,
wherein the converter-side signal electronics have a means for planning and determining points in time of switching events of the controllable switches of the converter (10, 14) and/or of the brake control (4), a means for advance calculation of the points in time of the next and next-but-one switching event,
and a means for generating a query signal which is sent when a time interval which is sufficiently long for the transmission of a protocol and during which no deterministically plannable disturbance is present is to be expected between these points in time, in particular PWM switching instants,
wherein the motor-side and/or converter-side signal electronics have a means for transmitting a protocol, in particular wherein the motor-side and the converter-side signal electronics each have a means for transmitting a bit-serial digital protocol,
wherein the protocol comprises information which represents a measured value detected in each case by the sensor or a data value originating from other data sources, such as actuator or data memory.

2. A system according to Claim 1,
**characterised in that**
the converter-side signal electronics have a time base (26), in particular clock,
and/or **in that**
the motor-side signal electronics likewise have a time base (26), in particular clock.

3. A system according to at least one of the preceding claims,
**characterised in that**
the connecting cable is embodied as a shielded cable, in particular with the lines being arranged within shielding.

4. A system according to at least one of the preceding claims,
**characterised in that**
the electric motor is a three-phase motor and the connecting cable has three lines for conducting the power signal.

5. A system according to at least one of the preceding claims,
**characterised in that**
the sensor is a temperature sensor (2), a brake status initiator and/or an angle sensor (3).

6. A system according to at least one of the preceding claims,
**characterised in that**
the protocol has address data, command data, sensor signal data and time data.

7. A method for operating a system, comprising an electric motor which is fed via a connecting cable from a converter (10, 14),
wherein on the motor motor-side signal electronics are arranged and at least one sensor is arranged, the signals of which are transmitted via the connecting cable to converter-side signal electronics,
wherein the converter-side signal electronics determine points in time of switching events, in particular of the controllable switches of the converter (10, 14) and/or of the brake control (4),
wherein the converter-side signal electronics plan, determine and calculate in advance the points in time of the next and next-but-one switching event,
wherein the converter-side signal electronics generate a query signal which is sent when a time interval which is sufficiently long for the transmission of a protocol and during which no deterministically plannable disturbance is present is to be expected between these points in time,
wherein the motor-side signal electronics, in particular directly, after receiving the query signal transmit a protocol via the connecting cable to the converter-side signal electronics,
wherein the protocol comprises information which comprises a measured value detected in each case by the sensor and an associated timestamp.

8. A method according to Claim 7,
**characterised in that**
the data transfer is carried out on a communication channel (7) in which the power signal is also transmitted,
in particular therefore the connecting cable is used as a communication channel (7).

9. A method according to one of Claims 7 to 8,
**characterised in that**
the length of time of the protocol is established at the beginning.

10. A method according to one of Claims 7 to 9,
**characterised in that**
at the beginning of the method synchronisation is carried out, in particular for determining a correction value for the time bases (26).

11. A method according to one of Claims 7 to 10,
**characterised in that**
a respective protocol comprises a measured value and a timestamp and/or address information and/or check information, in particular a check bit.

12. A method for operating a system, comprising an electric motor which is fed via a connecting cable from a converter (10, 14),
wherein motor-side signal electronics are arranged on the motor and at least one sensor is arranged, the signals of which are transmitted via the connecting cable to converter-side signal electronics,
**characterised in that**
the converter-side signal electronics plan and determine points in time of switching events of the controllable switches of the converter (10, 14) and/or of the brake control (4),
wherein the converter-side signal electronics calculate in advance the points in time of the next and next-but-one switching event,
wherein the converter-side signal electronics send to the motor-side signal electronics information about a time period, in particular time frame (22), permitted for the data transfer from the motor-side signal electronics to the converter-side signal electronics,
wherein the time period is of such length that it is sufficiently long for the transmission of a protocol and during which no deterministically plannable disturbance is present,
wherein the motor-side signal electronics in this time period transmit one or more protocols via the connecting cable to the converter-side signal electronics,
wherein the respective protocol in each case comprises information which comprises a measured value detected in each case by the sensor and an associated timestamp.

## Revendications

1. Système, comprenant un moteur électrique alimenté par un convertisseur (10, 14) par l'intermédiaire d'un câble de liaison, en particulier d'un câble d'alimentation,
sachant qu'une unité électronique de signalisation côté moteur est disposée sur le moteur, sachant en particulier que l'unité électronique de signalisation comprend au moins un capteur, un actionneur et/ou une mémoire de données, disposés pour transmettre des signaux par l'intermédiaire du câble de liaison de l'unité électronique de signalisation à une unité électronique de signalisation côté convertisseur,
sachant que l'unité électronique de signalisation côté convertisseur présente un moyen pour planifier et déterminer des instants d'événements de commutation des commutateurs asservissables du convertisseur (10, 14) et/ou de la commande de frein (4), présente un moyen pour calculer à l'avance les instants du prochain événement de commutation et du suivant, et présente un moyen pour générer un signal d'interrogation qui est émis si une période suffisamment longue pour la transmission d'un protocole, pendant laquelle aucune perturbation pouvant être prévue de manière déterminante n'est présente, est attendue entre lesdits instants, en particulier les instants de commutation MLI,
sachant que l'unité électronique de signalisation côté moteur et/ou l'unité électronique de signalisation côté convertisseur présente un moyen pour transmettre un protocole, sachant en particulier que l'unité électronique de signalisation côté moteur et l'unité électronique de signalisation côté convertisseur présentent chacune un moyen pour transmettre un protocole numérique en série par bit,
sachant que le protocole comprend une information qui représente une valeur de mesure respectivement enregistrée par le capteur ou une valeur de donnée provenant d'autres sources de données, comme un actionneur ou une mémoire de données,

2. Système selon la revendication 1, **caractérisé en ce que** l'unité électronique de signalisation côté convertisseur présente une base de temps (26), en particulier une horloge,
et/ou **en ce que** l'unité électronique de signalisation côté moteur présente également une base de temps (26), en particulier une horloge.

3. Système selon au moins une des revendications précédentes, **caractérisé en ce que** le câble de liaison est réalisé sous la forme d'un câble blindé, sachant en particulier que les lignes sont disposées à l'intérieur d'un blindage.

4. Système selon au moins une des revendications précédentes, **caractérisé en ce que** le moteur électrique est un moteur triphasé et le câble de liaison présente trois lignes pour faire passer le signal de puissance.

5. Système selon au moins une des revendications précédentes, **caractérisé en ce que** le capteur est un capteur de température (2), un déclencheur d'état de freinage et/ou un capteur d'angle (3).

6. Système selon au moins une des revendications précédentes, **caractérisé en ce que** le protocole présente des données d'adresses, des données d'instructions, des données de signaux de capteur et des données de temps.

7. Procédé pour faire fonctionner un système comprenant un moteur électrique alimenté par un convertisseur (10, 14) par l'intermédiaire d'un câble de liaison,
sachant que sont disposés sur le moteur une unité électronique de signalisation côté moteur et au moins un capteur, dont les signaux sont transmis par l'intermédiaire du câble de liaison à une unité électronique de signalisation côté convertisseur,
sachant que l'unité électronique de signalisation côté convertisseur détermine des instants d'événements de commutation, en particulier des commutateurs asservissables du convertisseur (10, 14) et/ou de la commande de frein (4),
sachant que l'unité électronique de signalisation côté convertisseur planifie, détermine et calcule à l'avance les instants du prochain événement de commutation et du suivant, sachant que l'unité électronique de signalisation côté convertisseur génère un signal d'interrogation qui est émis si une période suffisamment longue pour la transmission d'un protocole, pendant laquelle aucune perturbation pouvant être prévue de manière déterminante n'est présente, est attendue entre lesdits instants,
sachant que l'unité électronique de signalisation côté moteur transmet après la réception du signal d'interrogation, en particulier directement après, un protocole à l'unité électronique de signalisation côté convertisseur par l'intermédiaire du câble de liaison, sachant que le protocole comprend une information qui comprend une valeur de mesure respectivement enregistrée par le capteur et une marque d'horodatage associée.

8. Procédé selon la revendication 7, **caractérisé en ce que** la transmission de données est réalisée sur un canal de communication (7) dans lequel est également transmis le signal de puissance,
en particulier donc le câble de liaison est utilisé comme canal de communication (7).

9. Procédé selon l'une des revendications 7 à 8, **caractérisé en ce que** la longueur dans le temps du protocole est ou sera définie au début.

10. Procédé selon l'une des revendications 7 à 9, **caractérisé en ce qu'**une synchronisation est effectuée au début du procédé, en particulier afin de déterminer une valeur de correction pour les bases de temps (26).

11. Procédé selon l'une des revendications 7 à 10, **caractérisé en ce qu'**un protocole respectif comprend une valeur de mesure et une marque d'horodatage et/ou une information d'adresse et/ou une information de contrôle, en particulier un bit de contrôle.

12. Procédé pour faire fonctionner un système comprenant un moteur électrique alimenté par un convertisseur (10, 14) par l'intermédiaire d'un câble de liaison,
sachant que sont disposés sur le moteur une unité électronique de signalisation côté moteur et au moins un capteur, dont les signaux sont transmis par l'intermédiaire du câble de liaison à une unité électronique de signalisation côté convertisseur,
**caractérisé en ce que** l'unité électronique de signalisation côté convertisseur planifie et détermine des instants d'événements de commutation des commutateurs asservissables du convertisseur (10, 14) et/ou de la commande de frein (4),
sachant que l'unité électronique de signalisation côté convertisseur calcule à l'avance les instants du prochain événement de commutation et du suivant,
sachant que l'unité électronique de signalisation côté convertisseur envoie à l'unité électronique de signalisation côté moteur une information via une période, en particulier une fenêtre de temps (22), autorisée pour la transmission de données de l'unité électronique de signalisation côté moteur à l'unité électronique de signalisation côté convertisseur,
sachant que la période est d'une longueur telle qu'elle est suffisamment longue pour la transmission d'un protocole, et qu'aucune perturbation pouvant être prévue de manière déterminante n'est présente pendant celle-ci,
sachant que l'unité électronique de signalisation côté moteur transmet pendant la période un ou plusieurs protocoles à l'unité électronique de signalisation côté convertisseur via le câble de liaison,
sachant que le protocole respectif comprend respectivement une information qui comprend une valeur de mesure respectivement enregistrée par le capteur et une marque d'horodatage associée.
